# EUROPEAN PATENT APPLICATION

(11) **EP 2 110 429 A1**
(43) Date of publication of application: **21.10.2009**
(21) Application number: 09157990.4
(22) Date of filing: 15.04.2009
(51) Int. Cl.: C11C 3/00, B01J 31/06

(54) **Batch Production Processes of Fatty Acid Alkyl Ester With Homogeneous (Hapjek)**

(30) Priority: 17.04.2008 TR 200802665
(71) Applicant: TÜBITAK Türkiye Bilimsel ve Teknolojik Arastirma Kurumu, 06100 Ankara (TR)
(72) Inventor: Unsal, Mehmet, PK 21 41470, Kocaeli (TR); Gul, Omer Faruk, PK 21 41470, Kocaeli (TR); Atac, Ozlem, PK 21 41470, Kocaeli (TR)

(57) **Abstract**

This invention is about the batch production of fatty acid alkyl esters using a novel catalyst, homogeneous alkali gel catalyst (HAPJEK). This invention is a process which provides a shorter transesterification time (approximately 30 minutes) in fatty acid alkyl ester production, a very short glycerine precipitation time (approximately 10 minutes) without any modification in reactor configuration. Moreover this invention is about the production of homogenous alkali polymeric gel catalyst (HAPJEK) which enables fatty acid alkyl ester production without neutralization and washing processes that are required to get a pure product in traditional transesterification process. Besides, this invention enables low cost production of fatty acid alkyl esters from crude vegetable and animal fats without any refining process and waste vegetable and animal fats without any filtration process. Moreover this invention covers utilization of polyelectrolyte gel in the batch production of fatty acid alkyl ester with heterogeneous catalysts.

## Description

### Subject of the Invention

Fossil fuels especially, coal, oil and natural gas, have a primary importance for the industry. However, fossil fuels are limited, nonrenewable, polluting and toxic. It is estimated that world oil reserve will be depleted until 2036 or 2041, if the consumption rate is equal to the rate in last few decades.

Biodiesel is one of the renewable energy sources that can be considered as alternative to fossil fuels. Ester originated fuels which are derived from animal fats or vegetable oils, like rapeseed and soybean, via transesterification reaction using short chain alcohols are called as Biodiesel.

Biodiesel can be used as a fuel directly or as a blend at any ratio with petroleum diesel. Biodiesel or biodiesel-diesel blends can be used in a diesel engine directly or with some small modifications on the engine.

Biodiesel has the potential to be an important sector as an energy source. Its direct use in diesel engines, efficiency closed to petroleum diesel, easy derivation from animal and vegetable fats, environment friendly structure are the reasons encouraging this potential. Biodiesel sector also contributes to work force and economy of energy agriculture.

As biodiesel is produced from agricultural products which use CO₂ for photosynthesis, it has no contribution to carbon cycle and greenhouse gas effect. It can be considered as natural absorber for CO₂ emissions. Besides, it is proved that, Biodiesel usage supports lower CO, SO₂, PM and unburned HC emissions.

When air pollution and global warming are considered, only in US, 22 giga tones CO₂/year and 1.5 million tones SO₂/year is emitted into the atmosphere due to the use of fossil fuel in car engines. Because of environmental concerns and energy demand, renewable and clean energy sources are required instead of fossil fuels.

When compared to fossil diesel, biodiesel utilization has 50% less damage to ozone layer. Sulfur compounds which causes acid rains, are at negligible levels in biodiesel fuel. CO (toxic gas) amount due to biodiesel combustion is 50% less than of diesel combustion.

The disadvantage of biodiesel in terms of emissions is, NOₓ emissions show an increase during biodiesel or biodiesel-fossil diesel blends combustion in diesel engine. For instance, NOₓ emissions of fossil diesel (80%)-biodiesel (20%) blends are 2-11 % higher than fossil diesel NOₓ emissions.

Nowadays, one of the most important research areas on renewable energy sources is Biodiesel. Catalyst and process development, equipment design and genetic studies to increase oil content of the plant are the main research areas to produce fatty acid methyl esters from animal and vegetable oils with high performance as an alternative fuel to petroleum diesel.

### State of the Art Technique

### 1. State of the Art Biodiesel Production

The basic process of transesterification is that, in the presence of a catalyst animal fats or vegetable oils react with an alcohol to produce glycerine and esters. In general homogeneous catalysts are being used in Biodiesel production technologies. However, these catalysts lead to some undesired reactions.

Batch biodiesel production process in general has a reaction time of 1-8 h and separation time is 8-16 h. Thus, time required for the production of 1 gallon biodiesel is approximately 24 hours. Some researchers reduced the process time.

In the US patent 5,354,878, Connelman et all., used refined and degummed oil in CD process. Catalytic transesterification reaction (alkali Catalyses) of oil with low molecular weight alcohols is carried out in serially connected 3 column reactors at a temperature of 100°C and under pressure. In this process, flow rate of alcohol and catalyst in first the column reactor is smaller than of separation of glycerine from the mixture. Then, reaction mixture from which glycerine was partially removed is transferred to second column reactor. At this step a large amount of glycerine is separated. Reaction mixture is transferred to the third column reactor and some amount of alcohol and catalyst is added into the mixture. From the third column, reaction mixture is transferred to a extraction column with water buffer solution where methanol, glycerin, soap and catalyst removal takes place. Biodiesel coming from extraction column is purified with water and is let phase separation. For the last step, residual water existing in biodiesel is evaporated.

In Lurgi Process, transesterification reaction takes place under atmospheric pressure and 60°C. Degummed and deacidified oil are required as raw material for this process. At the presence of catalyst refined oil and methanol react in a two-stage mixer-settler reactor. Since glycerine taken from the bottom of second mixer-settler reactor contains methanol and catalyst, it is fed back to the first mixer-settler reactor. Methanol contained in the glycerine taken from the bottom of first mixer-settler reactor is recycled via distillation. Biodiesel from the second reactor is washed with water to remove impurities. At the last stage, methyl ester is purified via distillation.

In Henkel process, biodiesel is produced from unrefined oil under 9000 kPa pressure and 240°C temperature. Excess methanol, catalyst and unrefined oil are heated to 240°C and transferred into the reactor. Then, unreacted methanol is removed from the media and recocered. Mixture is taken to separator and 90% of the glycerine is removed. Methyl ester is neutralized, washed with water and sent to distillation column for purification.

In all processes mentioned above, transesterification reaction takes place in the presence of homogeneous alkali catalyst and each the process has some disadvantages. One disadvantage of the alkali catalyzed transesterification is the precipitation process of glycerine. Both fatty acid alkyl esters and glycerine are soluble in methanol. After reaction, excess alcohol in the reaction media behaves as surfactant which leads to very long precipitation time for glycerine.

Another disadvantage of alkali catalyzed transesterification reaction is neutralizing the alkai reaction media by inorganic acid addition. In continuous processes additional equipment and in batch processes additional reaction time is required for this operation.

Washing biodiesel with distilled water to remove mono- and di-glyceride, glycerine, inorganic salt and soap from the product is another disadvantage of alkali catalyzed transesterification reaction. Water consumption is fairly high and purification of waste water is required

### 2. State of the Art Catalysts Technologies Being Used in Biodiesel Production

Homogeneous and heterogeneous catalysts are being used in fatty acid methyl ester production. Alkali catalysts like, acceptor agent, sodium hydroxide (NaOH) and potassium hydroxide (KOH) which are soluble in alcohol and can form their alcoxides are called homogenous catalysts. Among these catalysts especially sodium hydroxide (NaOH) is being used in several homogenous alkali catalyzed processes like CD Process, Henkel Process, Lurgi Process and BIOX process. Besides, several patents like US 6,489,496, US 6,965,043, US 6,174,501 include studies about utilization of sodium hydroxide catalyst (NaOH) in fatty acid methyl ester production. Acid-base reaction occurs when homogenous catalysts react with alcohols. Short chained alcohols which are weak acids and sodium hydroxide (NaOH) and potassium hydroxide (KOH) which are strong base react reversibly and form alcohol salts (alkali alcoxide). In this reaction by-product is water (H₂O). One disadvantage of alkali catalyzed reactions is presence of by-product water in the media. This reversible reaction continues during the fatty acid methyl ester production.

ROH + NaOH or KOH ⇄ RO⁻Na⁺ (or K⁺) + H₂O

Presence of water in the media supports saponification reaction during fatty acid methyl ester formation. This results as a reaction yield decrease in fatty acid alkyl ester production. Removal of soap from fatty acid methyl esters after transesterification reaction is achieved by precipitation of glycerine, acid neutralization and multi-stage distilled water washing processes. All these stages are hard and high-cost processes. Beside, purification of washing water requires additional processes and investment.

To minimize the saponification reaction, in general, metal alcoxide is used. In the US patent 4,895,989 Sandler et all. produced sodium alcoxide production via pervaporation process. In the study, alkali metal hydroxides and 1-6 carbon alcohols are mixed with a ratio of 1:2-1:10 and a temperature of 80-110°C and metal alcoxides are obtained. Water formed after reaction is removed via pervaporation process with a membrane consisting of polyvinyl alcohol. In the process, alcohol-water mixture which evaporates at 80-110°C is heated to 120°C and transferred to pervaporation membrane. Alcohol that can not pass trough membrane is condensed and fed back to the reaction system. It is mentioned that water passes trough the membrane and leaves the system. Disadvantages of this is process are, difficulty in applying pervaporation process in the industry, permeability and plugging problems in pervaporation membrane and high heating costs.

In the US patent 2005/0177088 A1, Balagopal et all. obtained metal alcoholate solution in an electrolytic process. According to this study, sodium metoxide contained in the methanol is produced using methanol and sodium hydroxide. Anodic solution cell contains sodium hydroxide and cathodic cell contains methanol. Both cells are separated with a NaSICON ceramic membrane which is sodium permeability selective under current. Reactions take place in anode and cathode are given below.

*Anode :* 2*OH⁻* → 1/2*O*₂ + *H*₂*O* + 2*e⁻*

*Cathode :* 2*CH*₃*OH* + 2*NaOH* → 2*NaOCH*₃ + *H*₂ + 1/2*O*₂ + *H*₂*O*

*Total :* 2*CH*₃*OH* + 2*NaOH →* 2*NaOCH*₃ *+ H*₂ + 1/2*O*₂ + *H*₂*O*

The current intensity applied to the ceramic membrane is specified to be 100 mA/cm². It is demonstrated that a solution of 25-28 % by weight is obtained in this system. Permeability of the ceramic membrane and membrane plugging, cost of the energy consumption in electrolysis process, removal of water which is formed in electrolysis from the product, flammable and explosive characteristics of hydrogen formed in the reaction are disadvantages of this process.

In the US patent 5,262,133 Adams et all. developed a process in which sodium alcoholate is produced from amalgam and recycling of mercury from amalgam occurs. In this process, it is pointed out sodium methylate is separated from mercury in the presence of 1-4 carbon alcohols and amalgam tungsten carbide, high carbon containing iron, iridium, ruthenium and their mixture. The reaction of the process is:

2NaHg + ROH→ 2NaOR + H₂ + 2Hg

Use of Hg, cost of separating mercury from the media, cost of energy consumption in electrolysis, environmental concerns because of mercury and flammable and explosive characteristics of hydrogen formed in the reaction are disadvantages of this process.

Buckholtz et all. in US patent 5,425,856 proved that, soil alkali alcoholates can be obtained by the electrochemical reaction of sodium and potassium salts with alcohols.

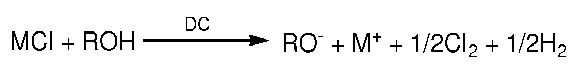

Here, M is Sodium or potassium, ROH is methanol, ethanol, propanol or butanol, DC is direct current. In this process sodium methylate is obtained via modified Hybinette cell which is between anode and cathode semi-cells. It is indicated that, cathode semi-cell contains methanol and sodium chloride solution, anode semi-cell contains methanol and when direct current applied on the system sodium alcoxide is obtained. While product sodium alcoxide is being sucked continuously from the system, sodium chloride is being fed to the system. It is defined that reaction occurs approximately at 130°C and under 30 kPa pressure. Cost of energy consumption in electrolysis, flammable and explosive characteristics of hydrogen formed in the reaction and cost of heating process in the electrolysis are disadvantages of this process.

The production of metal alcoxides is high-cost processes. Major disadvantage of metal alcoxides in fatty acid alkyl ester production process is that, they lead to saponification reaction with water present in the media during transesterification reaction. If oil contains water metal alcoxides are hydrolyzed to metal hydroxides and prefer saponification reaction. Neutralization caused by homogenous alkali catalyst and water washing requires additional equipment and processes like distillation of water present in the fatty acid alkyl ester after washing and purification of used water, thus additional investment and operation costs are needed.

Another catalyst dependent process in fatty acid methyl ester production is heterogeneous catalyzed process. Super acid and base specific polymeric compounds, organic compounds modified by impregnation as well as immobilized lipase as biological catalysts are such heterogeneous catalysts.

In a study by Stern et all. (US patent 5,908,946), 6-26 carbon animal fats and vegetable oils and 1-5 carbon short chain alcohols are transesterified at the presence of solid catalysts such as zinc oxide, zinc oxide-aluminum oxide and zinc oxide-zinc aluminates. Formulas of the solid catalyst are:

ZnAl₂O₄, xZnO, yAl₂O₃

X and y coefficients are between 0-2. Esterification reaction occurs in one or more steps. The reaction efficiency 97% when x=0.66 and y=1.81, rapeseed oil/methanol ratio 2:1 (v/v) at 235°C and under 50 bar pressure. Reaction products are; monoglyceride: 1.6%, diglyceride: 1.2%, triglyceride: 0.08%. Low reaction efficiency and high cost process due to the high temperature and pressure, neutralization of solid catalyst particles and/or ions released into the reaction media during transesterification are the disadvantages of the process. Moreover, composition of the product does not meet to EN 14214 standards.

"Görsel¹ processes" which is used in batch production of fatty acid methyl esters, is a process uses HAPJEK as catalyst and has low energy, operation and investment costs. In Görsel processes, transesterification reaction for production of fatty acid methyl eseters is faster compared to present processes. This process provides a rapid tranesterification reaction, rapid precipitation of glycerine after transesterification and does not require neutralization and washing.

### Detailed Disclosure of the Invention

This invention is about batch production processes (Görsel Processes) of fatty acid methyl esters using a novel homogenous alkali polymeric gel catalyst (HAPJEK). This invention is about a process which provides a shorter transesterification time (approximately 30 minutes) in fatty acid alkyl ester production and a very short glycerine precipitation time (approximately 10 minutes) without any changes in reactor configuration. This invention is about a process in which fatty acid alkyl esters are produced without neutralization and washing steps as in traditional methods to obtain purified product after transesterification. This invention comprises centrifuge or filtration processes of fatty acid alkyl esters or glycerin extraction process and evaporation

¹ The name "Görsel" given by our laboratory group who are the inventors to the processes has only been used for dedication purposes. It is not a terminological expression in the literature. process simultaneously during the evaporation of short chain alcohols. This invention comprises the process which provides low cost production of fatty acid alkyl esters from crude/waste vegetable oils or animal fats without any refinement/filtration processes. Moreover this invention comprises batch production process of fatty acid alkyl esters using heterogeneous catalyst and polyelectrolyte gel.

Production of fatty acid alkyl esters with Görsel Processes is extremely simple and easy. For the production process; refined or unrefined crude vegetable oil or animal fats or unfiltered waste vegetable oil/animal fats with a temperature between 25-65° C, HAPJEK and short chain alcohol are mixed at a temperature of 25-65° C. After reaction, glycerin is precipitated, excess methanol is evaporated. To remove the impurities from fatty acid alkyl esters, centrifuge, filtration or extraction with glycerin are applied.

### Advantages of the Invention

At the first step of the process, transesterification reaction is completed in a very short reaction time (approximately 30 minutes). This provides a decrease in production cost especially in energy cost and an increase in production capacity per day.

Glycerin precipitation step is extremely rapid (approximately 10 minutes) which leads to an increase in daily production capacity.

After glycerin precipitation neutralization is not required so there are no water and acid consumptions. Consequently extra equipment for those processes is not required which reduces the investment costs for the total process.

Since there is no neutralization step and formed soap and unreacted products are precipitated in glycerin precipitation, there is no need for water washing process. Therefore there is not any water consumption and any additional process to purify water. Since there is not any investment for equipment used in those processes capital cost of the process is lower.

Short chain alcohol is the only component being evaporated during evaporation process. Due to the water free reaction media, alcohol obtained after evaporation is of the same physical characteristics with the alcohol used as raw material in transesterification process. During evaporation of short chain alcohols, simultaneously centrifuge of fatty acid alkyl esters or filtration process or extraction with glycerin process takes place.
There is no need for water distillation process from fatty acid alkyl esters. Since the reaction occurs in an anhydrous media high cost distillation process is nor required.
Energy, investment and operation costs of Görsel Processes are considerably low. Moreover, Görsel Processes meet green chemical technologies and clean production technologies that are described by EPA.

### Application of the Invention and Explanation of Figures

Flow diagrams of Görsel Processes for the production of fatty acid alkyl esters that is the subject of the invention are given in the following figures:

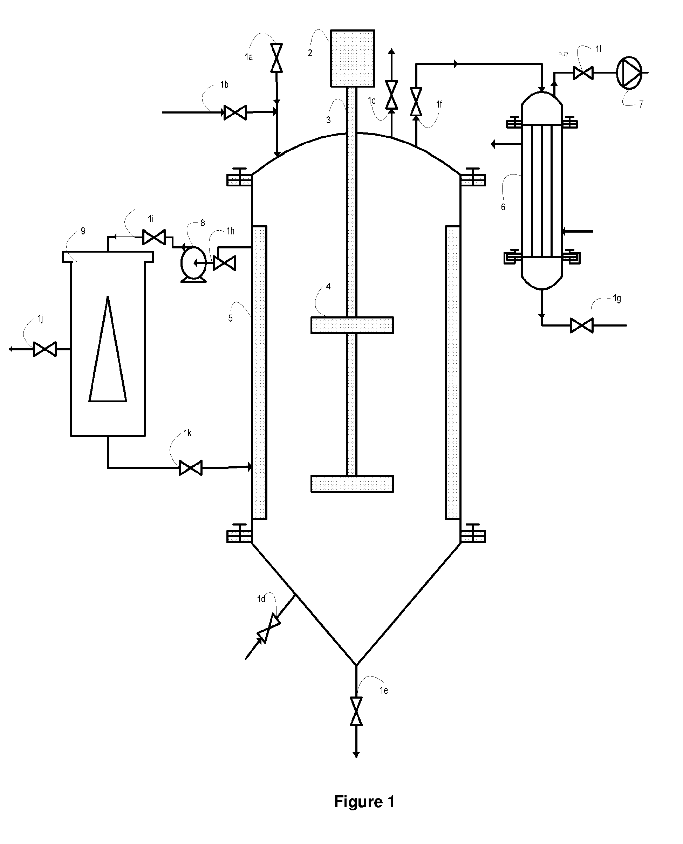

Figure 1- Görsel process-1 is the batch production process of fatty acid alkyl esters using crude or refined vegetable oils, waste frying oils and animal fats and homogeneous alkali polymeric gel catalyst (HAPJEK). This is the figure of the Görsel Process-1. As the characteristic of this process, during the evaporation process to remove excess alcohol after transesterification process, centrifuge process is conducted simultaneously to remove the impurities from fatty acid alkyl esters which minimize the purification costs.

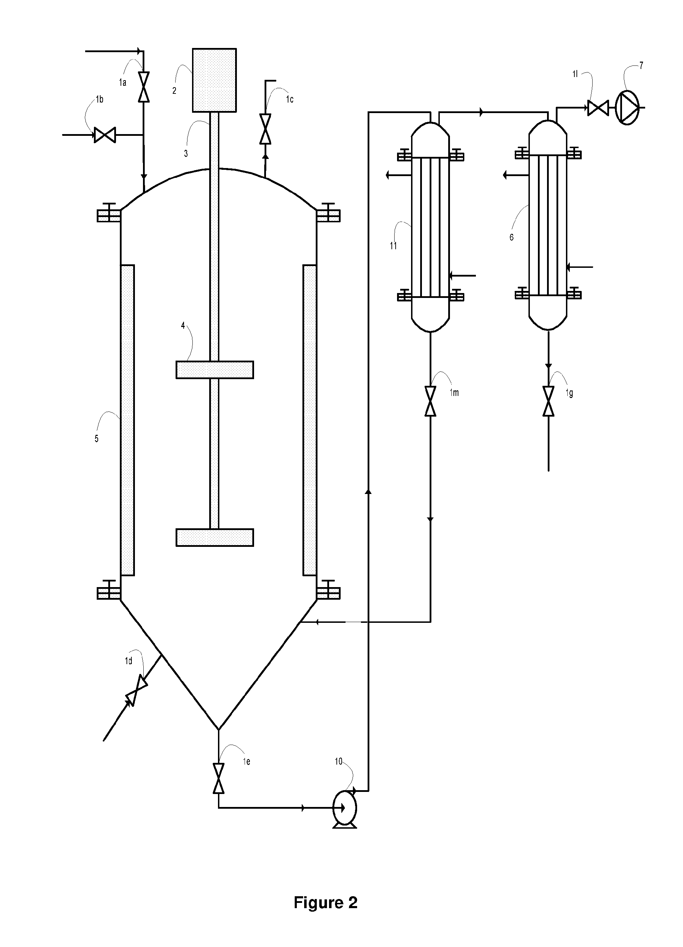

In the Görsel process-1 all the valves (excluding 1c, 1c is safety valve), pumps, vacuum pumps, engines and centrifuge are of exproof quality. Because of the explosion risk due to alcohol, the air in the reactor is discharged by inert gas stream to provide an exproof system for the production. The air in the reactor (5) is discharged using inert gas (nitrogen, argon etc.). For this process (1 d), (1 f), (1 g) and (11) valves are opened. Valve (1d) is the valve opens inert gas line, nitrogen fills in the reactor (5) when valve (1d) is opened. The air is discharged with nitrogen through (1 f), (1 g) and (1l) valves. After the air is discharged, (1 d), (1 f), (1 g) and (11) valves are closed. Before the transesterification reaction, raw material oil is charged to the reactor (5) via valve (1 a). The reactor is a stirred tank reactor and has the characteristics of; adjustable rpm, flame-proof engine (2), resistance to vibration and fatigue, inert in basic media, shaft (3) made of high strength material, turbine, impeller or propeller (4) (resistant to vibration and fatique, inert in basic media, high strength material). After oil is fed to the reactor (5) valve (1 a) is closed. It is necessary to heat the oil in the reactor (5) before transesterification. The oil is heated to 25-65°C preferably to 55°C with a mixing rate of 1-500 rpm preferably 150 rpm. Before starting the reaction with heated oil and homogeneous alkali polymeric gel catalyst (HAPJEK) mixing rate should be increased. The reason is that at the beginning homogeneous alkali polymeric gel catalyst and oil can not mix well which cause the reaction start slowly. With fast mixing, mass transfer resistance against the mixing is broken. After the heating of the oil is completed the mixing rate is increased to a value of 150-750 rpm preferably 600 rpm. At the transesterification step, while oil is being mixed wit h a rate of 150-750 rpm preferably 600 rpm, the mixture of HAPJEK and short chain alcohol is charged to the reactor (5) via valve (1 b). After transfer of HAPJEK and short chain alcohol is completed valve (1b) is closed. Transesterification reaction conditions are a temperature of 25-65°C preferably 55°C, a mixing rate of 150-750 rpm preferably 600 rpm and the reaction is completed in 30 minutes. In glycerin precipitation step engine (2) is stopped and reaction mixture is kept waiting for 10 minutes for glycerin precipitation. After decantation of glycerin phase is discharged via valve (1e). Evaporation process to remove the excess alcohol in fatty acid alkyl esters after transesterification and simultaneously centrifuge process to remove the impurities present in fatty acid alkyl esters are made. Evaporation process is done in the reactor (5). To purify impurities and remove the excess alcohol from fatty acid alkyl esters (1 f), (1 h), (1 i), (1j), (1k) and (1l) valves are opened. Vapor alcohol is discharged via (1 f) and (1j) valves, fatty acid alkyl ester with all impurities are transferred to centrifuge via (1 h) and (1i) valve lines. After centrifuge, impurities leave the media via (1j) valve line and purified fatty acid alkyl esters go into the reactor (5) via (1 k) valve line. Simultaneously with these processes pump (8) (fatty acid alkyl esters constituting all impurities is sent to the centrifuge with this pump), centrifuge (9), vacuum pump (7) operate. Evaporation conditions are: temperature of fatty acid alkyl esters is 80-85°C preferably 80°C, pressure of the media is reduced to 100-600 mbar preferably 300 mbar with vacuum pump (7). At 80°C and under 300 mbar pressure alcohol present in fatty acid alkyl ester evaporates. Passing through a condenser (6) volatile alcohol condensates. Centrifuge process takes place simultaneously with evaporation process. Impurities in fatty acid alkyl esters are separated with centrifuge and discharged via valve (1j). Evaporation-centrifuge operation continues 1-2 hours preferably 1 hour. Obtained fatty acid alkyl esters are discharged via valve (1e). If necessary, fatty acid alkyl esters are filtered to remove impurities. Alcohol recovered is transferred from condenser tank via valve (1 g). Figure 2- Görsel process-2 is the batch production process of fatty acid alkyl esters using crude or refined vegetable oils, waste frying oils and animal fats and homogeneous alkali polymeric gel catalyst (HAPJEK). This is the figure of the Görsel Process-2. In this process, after decantation process, methanol present in lower phase glycerin is separated from glycerin by evaporation. Alcohol free glycerin is sent to lower phase again for extraction to remove methanol and impurities present in upper phase (fatty cid alkyl esters). Görsel process-2 is the flow diagram of mentioned evaporation process which operates with extraction process simultaneously. In the Görsel -2 process all the valves (excluding 1c, 1c is safety valve), pumps, vacuum pumps, engines and centrifuge are of exproof quality. Because of the explosion risk due to alcohol, the air in the reactor is discharged by inert gas stream to provide an exproof system for the production. The air in the reactor (5) is discharged using inert gas (nitrogen, argon etc.). For this process (1 d), (1 f), (1 g) and (1l) valves are opened. Valve (1d) is the valve opens inert gas line, nitrogen fills in the reactor (5) when valve (1d) is opened. The air is discharged with nitrogen through (1f), (1 g) and (1l) valves. After the air is discharged, (1 d), (1 f), (1 g) and (1l) valves are closed. Before the transesterification reaction, raw material oil is charged to the reactor (5) via valve (1 a). The reactor is a stirred tank reactor and has the characteristics of; adjustable rpm, exproof engine (2), resistance to vibration and fatigue, inert in basic media, shaft (3) made of high strength material, turbine, impeller or propeller (4) (resistant to vibration and fatique, inert in basic media, high strength material). After oil is fed to the reactor (5) valve (1a) is closed. It is necessary to heat the oil in the reactor (5) before transesterification. The oil is heated to 25-65°C preferably to 55°C with a mixing rate of 1-500 rpm preferably 150 rpm. Before starting the reaction with heated oil and homogeneous alkali polymeric gel catalyst (HAPJEK) mixing rate should be increased. The reason is that at the beginning homogeneous alkali polymeric gel catalyst and oil can not mix well which cause the reaction start slowly. With fast mixing, mass transfer resistance against the mixing is broken. After the heating of the oil is completed the mixing rate is increased to a value of 150-750 rpm preferably 600 rpm. At the transesterification step, while oil is being mixed wit h a rate of 150-750 rpm preferably 600 rpm, the mixture of HAPJEK and short chain alcohol is charged to the reactor (5) via valve (1 b). After transfer of HAPJEK and short chain alcohol is completed valve (1 b) is closed. Transesterification reaction conditions are a temperature of 25-65°C preferably 55°C, a mixing rate of 150-750 rpm preferably 600 rpm and the reaction is completed in 30 minutes. In glycerin precipitation step engine (2) is stopped and reaction mixture is kept waiting for 10 minutes for glycerin precipitation. Glycerin evaporation process is a treatment which reduces the operation costs. Glycerin formed after transesterification is the 1/12 of the total weight of the fatty acid alkyl ester. Some amount of the precipitated glycerin is transferred to the evaporator (11) via valve (1 e) and pump (10). At the same time valves (1 m) and (1l) are opened. Glycerin in the evaporator is heated to 65-70°C preferably to 70°C, pressure is reduced to 100-600mbar preferably to 300 mbar with vacuum pump (7). Gas alcohol from evaporator is condensed in the condenser (6). Alcohol free glycerin is fed to the reactor (5). Alcohol free glycerin is pumped into the lower phase via valve (1 m). Impurities in fatty acid alkyl esters and excess alcohol are extracted from fatty acid alkyl ester through alcohol free glycerin. Because glycerin has a stronger affinity then fatty acid alkyl ester in the reaction the extraction process is off high performance. By mixing the two phased liquid in the reactor (5) with a rate of 30-50 rpm extraction of alcohol and impurities in fatty acid alkyl esters occurs. Evaporation-extraction processes continue 1-2 hours preferably 1 hour. After Evaporation-extraction processes are completed first waste glycerin is transferred then fatty acid alkyl esters are transferred via valve (1d).If necessary, to remove impurities fatty acid alkyl ester can be filtered. Recycled short chained alcohol is transferred from condenser via valve (1 g).

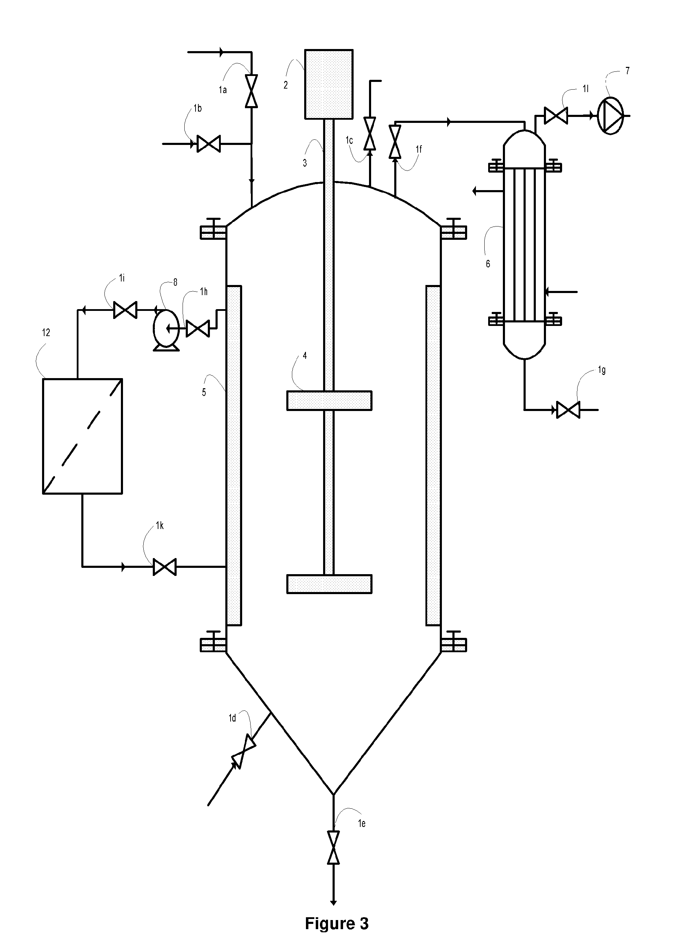

Figure 3- Görsel process-3 is the batch production process of fatty acid alkyl esters using crude or refined vegetable oils, waste frying oils and animal fats and homogeneous alkali polymeric gel catalyst (HAPJEK). This is the figure of the Görsel Process-3. As the characteristic of this process, during the evaporation process to remove excess alcohol after transesterification process, filtration process is conducted simultaneously to remove the impurities from fatty acid alkyl esters which minimize the purification costs.

In the Görsel -3 process all the valves (excluding 1c, 1c is safety valve), pumps, vacuum pumps, engines and centrifuge are of exproof quality. Because of the explosion risk due to alcohol, the air in the reactor is discharged by inert gas stream to provide an exproof system for the production. The air in the reactor (5) is discharged using inert gas (nitrogen, argon etc.). For this process (1 d), (1 f), (1 g) and (1l) valves are opened. Valve (1d) is the valve opens inert gas line, nitrogen fills in the reactor (5) when valve (1d) is opened. The air is discharged with nitrogen through (1 f), (1 g) and (1l) valves. After the air is discharged, (1 d), (1 f), (1 g) and (1l) valves are closed. Before the transesterification reaction, raw material oil is charged to the reactor (5) via valve (1 a). The reactor is a stirred tank reactor and has the characteristics of; adjustable rpm, exproof engine (2), resistance to vibration and fatique, inert in basic media, shaft (3) made of high strength material, turbine, impeller or propeller (4) (resistant to vibration and fatique, inert in basic media, high strength material). After oil is fed to the reactor (5) valve (1a) is closed. It is necessary to heat the oil in the reactor (5) before transesterification. The oil is heated to 25-65°C preferably to 55°C with a mixing rate of 1-500 rpm preferably 150 rpm. Before starting the reaction with heated oil and homogeneous alkali polymeric gel catalyst (HAPJEK) mixing rate should be increased. The reason is that at the beginning homogeneous alkali polymeric gel catalyst and oil can not mix well which cause the reaction start slowly. With fast mixing, mass transfer resistance against the mixing is broken. After the heating of the oil is completed the mixing rate is increased to a value of 150-750 rpm preferably 600 rpm. At the transesterification step, while oil is being mixed wit h a rate of 150-750 rpm preferably 600 rpm, the mixture of HAPJEK and short chain alcohol is charged to the reactor (5) via valve (1 b). After transfer of HAPJEK and short chain alcohol is completed valve (1 b) is closed. Transesterification reaction conditions are a temperature of 25-65°C preferably 55°C, a mixing rate of 150-750 rpm preferably 600 rpm and the reaction is completed in 30 minutes. In glycerin precipitation step engine (2) is stopped and reaction mixture is kept waiting for 10 minutes for glycerin precipitation. After decantation glycerin phase is discharged via valve (1 e). Evaporation process to remove the excess alcohol in fatty acid alkyl esters after transesterification and simultaneously filtration process to remove the impurities present in fatty acid alkyl esters are made. Filtration modules are; sand filtration, perlit filtration and microfiltration. Evaporation process is done in the reactor (5). To purify impurities and remove the excess alcohol from fatty acid alkyl esters (1f), (1 h), (1i), (1j), (1 k) and (1l) valves are opened. Vapor alcohol is discharged via (1f) and (1j) valves, fatty acid alkyl ester with all impurities are transferred to filter via (1 h) and (1i) valve lines. After filtration impurities are kept in filter. Purified fatty acid alkyl esters go into the reactor (5) via (1 k) valve line. Simultaneously with these processes pump (8) (fatty acid alkyl esters constituting all impurities is sent to the centrifuge with this pump), filter (12), vacuum pump (7) operate. Evaporation conditions are: temperature of fatty acid alkyl esters is 80-85°C preferably 80°C; pressure of the media is reduced to 100-600 mbar preferably 300 mbar with vacuum pump (7). Evaporation occurs in reactor (5). At 80°C and under 300 mbar pressure alcohol present in fatty acid alkyl ester evaporates. Passing through a condenser (6) volatile alcohol condensates. Filtration process takes place simultaneously with evaporation process. Impurities in fatty acid alkyl esters are separated in the filter (12). Evaporation-filtration operation continues 1-2 hours preferably 1 hour. Obtained fatty acid alkyl esters are discharged via valve (1e). If necessary, fatty acid alkyl esters are filtered to remove impurities. Alcohol recovered is transferred from condenser tank via valve (1g).

Processes stated above to remove impurities from fatty acid alkyl esters can be used either alternatives to each other or can be used in combination.

Processes stated above can be used in batch production processes of fatty acid alkyl esters with heterogeneous catalyst and polyelectrolyte gel.

### EXAMPLE 1:

In the process given in Figure 1 350 kg rapeseed oil (MA: 882,76 kg/mol, aciv value: 0,2 mgKOH/g oil, iodine valu: 104 g/100 g oil, density: 0,9213 g/ml) is heated to 55°C in the reactor (5). The oil is mixed with a rate of 600 rpm. HAPJEK and methanol mixture (4 kg NaOH, 77 kg methanol and 1.1 g PEG 1450) is fed into the mixing oil. Reaction is completed approximately in 30 minutes at a temperature of 55°C and mixing rate of 600 rpm. Reaction mixture is kept waiting for 10 minutes for glycerin precipitation. Glycerin phase at the bottom of reactor (5) is separated. While excess methanol is being evaporated fatty acid alkyl esters are continuously centrifuged (9). Evaporation-centrifuge operation continues 1 hour. After filtration of fatty acid alkyl esters the reaction yield is 99%.

**Table 1. Some results for fatty acid alkyl esters produced from refined rapeseed oil**

| **Analysis component** | **value** |
|---|---|
| Mono-glycerid | %0,54 |
| Di-glycerid | %0,07 |
| Tri-glycerid | %0,1 |
| Free glycerol | %0,01 |
| Total glycerol | %0,17 |
| Ester content | %99 |
| Acid value | 0,185 mg KOH/g oil |
| Sodium (Na⁺) and Potassium (K⁺) Concentration | 1,27 mg/L |
| Calcium (Ca⁺⁺) and Magnesium (Mg⁺⁺) Concentration | 0,81 mg/L |
| Total contamination | 12,7 mg/kg |
| Carbon residue | % 0.020 |
| Phosphor | 0,3 mg/kg |

### EXAMPLE 2:

In the process given in Figure 3 350 kg rapeseed oil (MA: 882,76 kg/mol, aciv value: 0,2 mgKOH/g oil, iodine valu: 104 g/100 g oil, density: 0,9213 g/ml) is heated to 55°C in the reactor (5). The oil is mixed with a rate of 600 rpm. HAPJEK and methanol mixture (4 kg NaOH, 77 kg methanol and 1.1 g PEG 1450) is fed into the mixing oil. Reaction is completed approximately in 30 minutes at a temperature of 55°C and mixing rate of 600 rpm. Reaction mixture is kept waiting for 10 minutes for glycerin precipitation. Glycerin phase at the bottom of reactor (5) is separated. While excess methanol is being evaporated fatty acid alkyl esters are continuously filtered (12). Evaporation-filtration operation continues 1 hour. After Görsel-3 process reaction yield of fatty acid alkyl esters is 99%.

**Table 2. Some results for fatty acid alkyl esters produced crude oil**

| **Analysis component** | **value** |
|---|---|
| Mono-glycerid | %0,66 |
| Di-glycerid | %0,11 |
| Tri-glycerid | %0,08 |
| Free glycerol | %0,01 |
| Total glycerol | %0,2 |
| Ester content | %99,2 |
| Acid value | 0,180 mg KOH/g oil |
| Sodium (Na⁺) and Potassium (K⁺) Concentration | 1,2 mg/L |
| Calcium (Ca⁺⁺) and Magnesium (Mg⁺⁺) Concentration | 0,8 mg/L |
| Total contamination | 12,3 mg/kg |
| Carbon residue | 0.018 % |

### Description of Figures

1. Valves
   1a-oil charge valve
   1b- alcohol-catalyst mixture charge valve
   1c- security valve
   1d- spare discharge valve/inert gas valve
   1e- main discharge valve
   1f- pre-condenser alcohol discharge valve
   1g- post-condenser alcohol discharge valve
   1h- pre-pump (8) valve
   1i- post-pump valve
   1j- lower phase discharge valve
   1k- upper phase discharge valve
   1l- pre-vacuum pump (7) valve
   1m- post-evaporator (11)valve
2. Engine
3. Shaft
4. Propeller
5. Reactor
6. Condenser
7. Vacuum pump
8. Pump used in phase separation
9. Centrifuge
10. Pump used in evaporation
11. Evaporator
12. Filter

## Claims

1. A method for producing fatty acid alkyl esters with a batch system from crude or refined vegetable oils, waste oils and animal fats **characterized by**;
a- mixing crude or refined vegetable oils, waste oils or animal fats with homogeneous alkali polymeric gel catalyst (HAPJEK) and short chain alcohol evaporating alcohol in a reactor (5) and evaporating alcohol in the reactor after decantation of glycerin,
b- transferring and condensing of short chain alcohol evaporated from fatty acid alkyl ester in the reactor (5) into the condenser (6) to be used again,
c- removing impurities from fatty acid alkyl esters simultaneously with alcohol evaporation in the reactor,
d- applicability of filtration to remove impurities from fatty acid alkyl esters as an option.

2. A method according to Claim 1, **characterized by** comprising transferring fatty acid alkyl esters to centrifuge or filter or extraction with decanted alcohol free glycerin simultaneously with evaporation of fatty acid alkyl esters to remove impurities from fatty acid alkyl esters.

3. A method according to Claim 1, **characterized by**;
a- discharging of air from reactor (5) with an inert gas (nitrogen, argon etc) passing through the system,
b- transferring crude or refined vegetable oil, waste vegetable oil or animal fats into the reactor (5) and heating of oil in the reactor to 25-65°C preferably to 55°C and simultaneously mixing with a rate of 1-500 rpm preferably 150 rpm,
c- increasing mixing rate to 150-750 rpm preferably to 600 rpm after oil heating is completed,
d- while mixing oil with a rate of 150-750 rpm preferably to 600 rpm, addition of HAPJEK and short chain alcohol into the reactor (5),
e- mixing oil, HAPJEK and short chain alcohol mixture with a rate of 150-750 rpm preferably to 600 rpm, at a temperature of 25-65°C preferably to 55°C for 30 minutes,
f- stopping the mixing in the reactor and waiting for 10 minutes for glycerin precipitation,
g- discharging of precipitated glycerin,
h- increasing the temperature of fatty acid alkyl ester to 80-85°C preferably to 80°C after transesterification and decreasing the pressure to 100-600 mbar preferably to 300 mbar with vacuum pump to evaporate excess alcohol from fatty acid alkyl esters, send to the condenser (6), condensate into liquid phase and discharge,
i- after discharge of precipitated glycerin, to remove impurities from fatty acid alkyl esters, evaporating and centrifuging of fatty acid alkyl esters simultaneously, discharging of impurities from centrifuge and feeding purified fatty acid alkyl esters back to the reactor (5),
j- discharging of fatty acid alkyl esters after evaporation-centrifuge operations.
k- Filtering of fatty acid alkyl esters if necessary.

4. A method according to Claims 1, 2, 3, **characterized by** vertical or decanter centrifuge is used as centrifuge equipment (9).

5. A method according to Claims 1, 2, 3, **characterized by** centrifuge operates at 5000-12000 rpm preferably 11000 rpm.

6. A method according to Claims 1, 2, 3, **characterized by** having filtration (11) instead of centrifuge to remove impurities from fatty acid alkyl esters simultaneously with alcohol evaporation in the reactor (5). Impurities are kept in the filter.

7. A method according to Claim 6, **characterized by**;
a- discharging of air from reactor (5) with an inert gas (nitrogen, argon etc) passing through the system,
b- transferring crude or refined vegetable oil, waste vegetable oil or animal fats into the reactor (5) and heating of oil in the reactor to 25-65°C preferably to 55°C and simultaneously mixing with a rate of 1-500 rpm preferably 150 rpm,
c- increasing mixing rate to 150-750 rpm preferably to 600 rpm after oil heating is completed,
d- while mixing oil with a rate of 150-750 rpm preferably to 600 rpm, addition of HAPJEK and short chain alcohol into the reactor (5),
e- mixing oil, HAPJEK and short chain alcohol mixture with a rate of 150-750 rpm preferably to 600 rpm, at a temperature of 25-65°C preferably to 55°C for 30 minutes,
f- stopping the mixing in the reactor and waiting for 10 minutes for glycerin precipitation,
g- discharging of precipitated glycerin,
h- increasing the temperature of fatty acid alkyl ester to 80-85°C preferably to 80°C after transesterification and decreasing the pressure to 100-600 mbar preferably to 300 mbar with vacuum pump to evaporate excess alcohol from fatty acid alkyl esters, send to the condenser (6), condensate into liquid phase and discharge,
i- after discharge of precipitated glycerin, to remove impurities from fatty acid alkyl esters, evaporating and filtering of fatty acid alkyl esters simultaneously, retaining impurities in the filter and feeding purified fatty acid alkyl esters back to the reactor (5),
j- discharging of fatty acid alkyl esters after evaporation-filtration operations,
k- filtering of fatty acid alkyl esters if necessary.

8. A method according to Claims 1, 2, 6, 7, **characterized by** sand filtration, rough filtration and microfiltration modules are used as filtration equipment.

9. A method according to Claims 1 and 2, **characterized by** removing alcohol from some amount of the precipitated glycerin in another evaporator (11) to remove impurities from fatty acid alkyl esters and simultaneously with this operation to feed alcohol free, high affinity glycerin back into the glycerin phase in the reactor(5) to provide alkyl ester extraction.

10. A method according to Claim 6, **characterized by**;
a- discharging of air from reactor (5) with an inert gas (nitrogen, argon etc) passing through the system,
b- transferring crude or refined vegetable oil, waste vegetable oil or animal fats into the reactor (5) and heating of oil in the reactor to 25-65°C preferably to 55°C and simultaneously mixing with a rate of 1-500 rpm preferably 150 rpm,
c- increasing mixing rate to 150-750 rpm preferably to 600 rpm after oil heating is completed,
d- while mixing oil with a rate of 150-750 rpm preferably to 600 rpm, addition of HAPJEK and short chain alcohol into the reactor (5),
e- mixing oil, HAPJEK and short chain alcohol mixture with a rate of 150-750 rpm preferably to 600 rpm, at a temperature of 25-65°C preferably to 55°C for 30 minutes,
f- to purify fatty acid alkyl esters formed after transesterification transferring some amount of precipitated glycerin to the evaporator (11), increasing the temperature of glycerin in the evaporator to 65-70°C preferably to 70°C and decreasing the pressure to 100-600 mbar preferably to 300 mbar with vacuum pump, condensing the gas phase alcohol coming from evaporator via a condenser (6) and feeding alcohol free glycerin back into the glycerin phase in the reactor (5),
g- condensing gas phase alcohol at the exit of the evaporator (11) via condenser(6),
h- extracting impurities and excess alcohol from the fatty acid alkyl esters with alcohol free glycerin in the reactor (5). Mixing the two phase liquid with rate of 30-50 rpm,
i- stooping the mixing and extraction operations to let glycerin precipitate for 10 minutes,
j- transferring first precipitated glycerin and secondly fatty acid alkyl esters,
k- if necessary filtering fatty acid alkyl esters to remove impurities.

11. A method according to above stated Claims, **characterized by** evaporation-purification processes continue 1-2 hours preferably 1 hour.

12. A method according to above stated Claims, **characterized by** the reactor which is a batch tank reactor or a plug flow reactor, used in transesterification reaction is resistant to vibration and fatique, made of material strength and inert to basic media, heat controlled.

13. A method according to above stated Claims, **characterized by** in the purification process simultaneously with evaporation centrifuge and/or filtration and/or glycerin extraction occur.

14. A method according to above stated Claims, **characterized by** heterogeneous catalyst- polyelectrolyte gel mixture is used as catalyst instead of homogeneous alkali polymeric gel catalyst (HAPJEK).
